Europäisches Patentamt

European Patent Office

Office européen des brevets

(11) Publication number: **0 054 741**
**B1**

(12) **EUROPEAN PATENT SPECIFICATION**

(45) Date of publication of patent specification: 08.05.85

(21) Application number: **81109515.7**

(22) Date of filing: **04.11.81**

(51) Int. Cl.⁴: **B 60 J 1/14,** B 60 H 1/26,
B 60 J 7/10, E 05 B 65/12,
E 05 C 19/14

(54) Hinged window locking mechanism.

(30) Priority: 19.12.80 JP 1816/79
19.12.80 JP 1816/80

(43) Date of publication of application:
30.06.82 Bulletin 82/26

(45) Publication of the grant of the patent:
08.05.85 Bulletin 85/19

(84) Designated Contracting States:
DE FR GB

(56) References cited:
EP-A-0 010 430
DE-B-1 163 178
DE-U-6 803 616
US-A-3 603 636

(73) Proprietor: NISSAN MOTOR COMPANY,
LIMITED
No.2, Takara-cho, Kanagawa-ku
Yokohama-shi Kanagawa-ken 221 (JP)

(73) Proprietor: KOKUSAN KINZOKU KOGYO
KABUSHIKI KAISHA
2-8-2, Kamata
Ota-ku Tokyo (JP)

(72) Inventor: Akashi, Akira
No. 4-6-6-3. Shonan-takatori
Yokoshuka City (JP)
Inventor: Kameyama, Takashi
No. 1204-2, Kurami, Samukawa-cho
Koza-gun Kanagawa-Prefecture (JP)

(74) Representative: Patentanwälte Grünecker, Dr.
Kinkeldey, Dr. Stockmair, Dr. Schumann, Jakob,
Dr. Bezold, Meister, Hilgers, Dr. Meyer-Plath
Maximilianstrasse 58
D-8000 München 22 (DE)

Courier Press, Leamington Spa, England.

## Description

### Background of the Invention

The present invention relates in general to a vehicle body having a locking mechanism for a window, and more particularly to a locking mechanism for locking a vehicular hinged window.

### Summary of the Invention

It is an object of the present invention to provide a vehicle body with an improved locking mechanism for a vehicular hinged window, which mechanism offers operators a safe handling work.

It is another object of the present invention to provide a vehicle body with an improved locking mechanism for a vehicular hinged window, by which mechanism the hinged window can be locked not only from the inside but also from the outside of the vehicle.

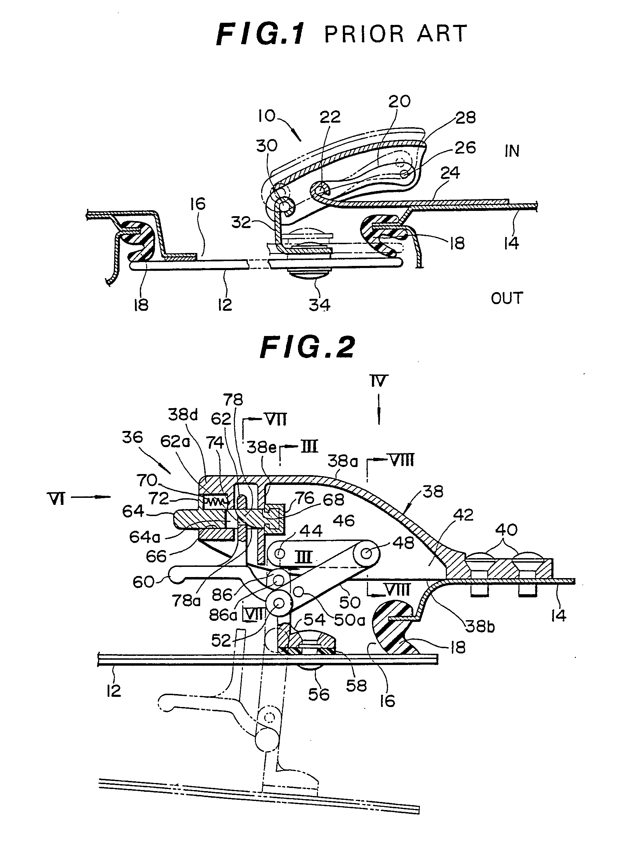

According to the present invention, and in common with this prior art shown in Fig. 1, there is provided a locking mechanism for a window which is hinged at its one edge to a vehicle body so as to be swingable at the outside of the vehicle body to open and close a window opening formed in the vehicle body, a base member secured to the vehicle body and projected into the window opening, a toggle device including two pivotally connected links, one link being pivotally connected at its free end to the base member and the other link being pivotally connected at its free end to a free end portion of the hinged window. The present invention is characterised by a locking device for locking the hinged window when the window takes its fully closed position, and in that the toggle device and the locking device are all located at the outside of the base member so as not to project toward the inside of the vehicle beyond the base member.

### Brief Description of the Drawings

Other objects and advantages of the present invention will become apparent from the following description when taken in conjunction with the accompanying drawings, in which:

Fig. 1 is a sectional view of a conventional locking mechanism for a hinged window;

Fig. 2 is a sectional view of a locking mechanism of a first embodiment of the present invention;

Fig. 3 is a sectional view taken along the line III—III of Fig. 2;

Fig. 4 is a view taken from the direction IV of Fig. 2;

Fig. 5 is a view taken from the direction V of Fig. 2;

Fig. 6 is a view taken from the direction VI of Fig. 2;

Fig. 7 is a sectional view taken along the line VII—VII of Fig. 2;

Fig. 8 is a sectional view taken along the line VIII—VIII of Fig. 2;

Fig. 9 is a fragmentary perspective view of a latch member;

Fig. 10 is a sectional view of a second link at a portion where tapered projections are provided;

Fig. 11 is a sectional view of a locking mechanism of a second embodiment of the present invention;

Fig. 12 is a detailed view of a portion of the second embodiment, where a generally V-shaped lever and an operation handle are located;

Fig. 13 is a partially broken view of the portion shown by Fig. 12; and

Fig. 14 is a view taken from the direction XIV of Fig. 12.

### Description of the Invention

Prior to describing the invention, a vehicle body having one of the conventional hinged window locking mechanisms will be described with reference to Fig. 1 in order to clarify the invention.

In Fig. 1, there is shown a conventional locking mechanism 10 which is applied to a hinged window 12 of the vehicle. The window 12 is hinged at its one edge to an inner panel 14 of the vehicle body to be swingable at the outside of the vehicle to open and close a window opening 16 formed in the vehicle body 14. The peripheral portion of the window opening 16 is margined with a weather strip 18 to assure, upon closing of the window 12, water sealing between the window 12 and the vehicle body 14.

The locking mechanism 10 hereinshown is of a toggle-link type, which comprises a link 20 having one end pivotally connected via a pivot shaft 22 to a bracket 24 secured to the vehicle body 14. The other end of the link 20 is pivotally connected via a pivot shaft 26 to an end of a handle 28. The other end of the handle 28 is pivotally connected via a pivot shaft 30 to a bracket 32 secured to the free end portion of the window 12. A bolt-nut unit 34 is used for connection of the bracket 32 to the window 12. When locking the window 12 at its closed position is required, the handle 28 and the link 20, which are jointed to each other, are folded up to assume the position indicated by phantom lines, and when opening the window 12 is required, the handle 28 and the link 20 are expanded moving the window 12 outward.

However, this type locking mechanism has several drawbacks in the following respects. First, because of its inherent construction, the handle 28 is projected remarkably toward the inside of the vehicle cabin upon handling thereof. This imposes a troublesome and dangerous handling work of a person who handles the locking mechanism. Second, since the locking of the window 12 has to be made by handling the locking mechanism itself, it is impossible to lock the window 12 by a person who stands outside of the vehicle.

To eliminate the above-mentioned drawbacks and inconveniency is an essential object of the present invention.

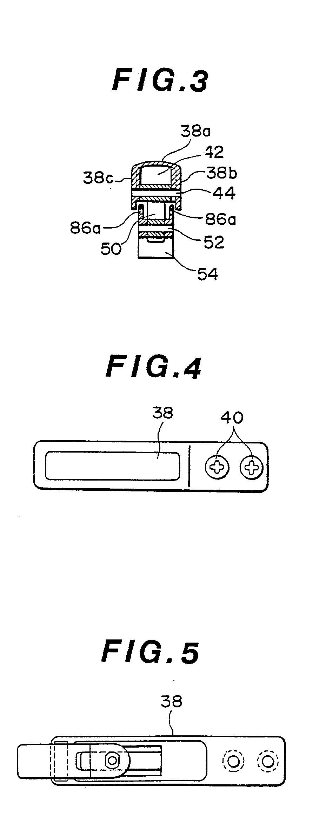

Referring to Figs. 2 to 9, especially Fig. 2, there is shown a first embodiment of the present invention. The locking mechanism 36 of this embodiment comprises a base member 38 which can act as a cover of essential parts of the mechanism as will become clear hereinafter. The base member 38 is of a generally channel-shaped construction as is seen from Fig. 3. The base member 38 is secured at its one end to the vehicle body inner panel 14 by bolts 40 and has a housing portion which is projected into the window opening 16. The housing portion is comprised of a smoothly curved bottom wall 38a and two spaced side walls 38b and 38c standing on the bottom wall 38a by which is defined a groove 42 which faces toward the outside of the vehicle. A pivotal shaft 44 is spanned between the side walls 38b and 38c for pivotally mounting thereon an end of a first link 46 of which the other end is pivotally connected via a pivot pin 48 to an end of a second link 50. The other end of the second link 50 is pivotally connected via a pivot pin 52 to an end of a bracket 54. The bracket 54 is secured at its base section to the free end portion of the hinged window 12 by bolts 56. For assuring the reliable connection of the bracket 54 to the window 12, a packing 58 of elastic material is disposed between the bracket 54 and the window 12.

An operating handle 60 is secured at its one end to the leading end of the bracket 54 to be movable therewith. As shown in Fig. 2, the free end of the handle 60 projects slightly beyond the leading end of the housing portion of the base member 38. The handle 60 is formed at its generally middle section with a projection or striker portion 62 which extends toward the inside of the housing portion of the base member 38. For the reason which will become apparent as the description proceeds, the striker portion 62 is formed with an opening 62a.

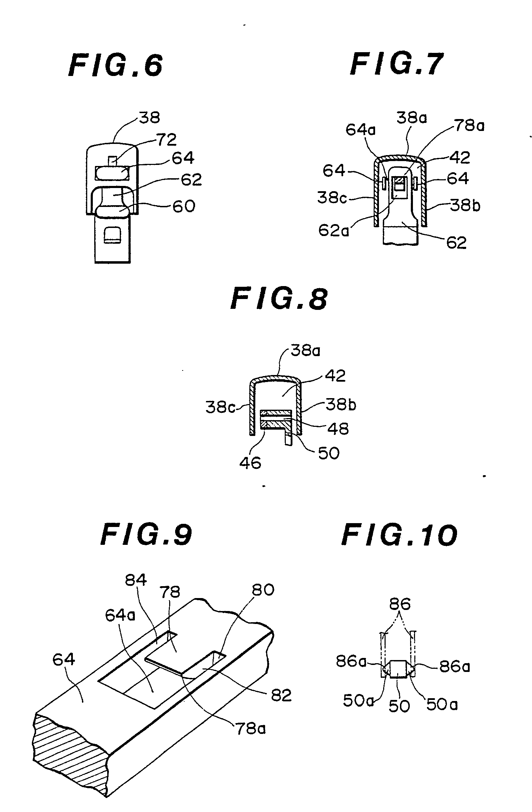

Incorporating with the striker portion 62 is a rod-shaped latch member 64 which is received in the housing portion of the base member 38 in a manner to be movable in a direction perpendicular to a direction in which the striker portion 62 moves. For receiving or holding therein the latch member 64, the base member 38 is formed with spaced first and second partition walls 38d and 38e which are spanned between the side walls 38b and 38c. As shown by Fig. 2, the first partition wall 38d is positioned at the leading end of the base member 38 and has a greater thickness than the second partition wall 38a. These partition walls 38d and 38e are respectively formed with aligned openings 66 and 68 by and in which the latch member 64 is axially movably received. A spring 70 is compressed between a spring seat 72 of the latch member 64 and another spring seat 74 of the first partition wall 38d to bias the latch member 64 in the leftward direction in Fig. 2. For preventing the latch member 64 from coming off from the partition walls 38d and 38e of the base member 38, the inboard end of the latch member is equipped with a stopper 76 which is contactable with the second partition wall 38e to restrict the leftward movement of the latch member 64. The latch member 64 is formed at its generally middle section with an opening 64a into which the striker portion 62 of the operation handle 60 is inserted upon a certain condition of the locking mechanism. As is seen from Fig. 9, a claw portion 78 having a tapered lower surface 78a is formed on a wall 80 of the opening 64a, leaving two spaced clearances 82 and 84 at its sides. As is seen from Fig. 2, the leading end of the claw portion 78 extends toward the top of the rod-shaped latch member 64. The claw portion 78 is so sized to smoothly enter in the opening 62a of the striker portion 62.

The second link 50 has a pair of tapered projections 50a (see Fig. 10) which project in the opposed directions from the link 50. A pair of catching arms 86 constructed of elastic resilient material, such as a rigid plastics, are secured to the bracket 54 in such a manner that respective recesses 86a formed in the catching arms 86 are capable of catching the tapered projections 50a of the link 50 when the link 50 assumes a certain position, that is, when the first and second links 46 and 50 are fully expanded.

Operation will be described in the following with reference to Fig. 2. For easy understanding of the operation, the description of it will commence with respect to a condition wherein the hinged window 12 is locked in its closed position, as is indicated by solid lines in Fig. 2. In this condition, the claw portion 78 of the latch member 64 is received in and engaged with the opening 62a of the striker portion 62 thereby suppressing the striker portion 62 and thus the operation handle 60 from moving toward the window 12.

When it is required to unlock and open the hinged window 12, the head of the latch member 64 is pushed against the biasing force of the spring 70 causing the claw portion 78 of the latch member 64 to be disengaged from the opening 62a of the striker portion 62. With the latch member 64 being kept in this condition, the operation handle 60 is shifted outwardly withdrawing the head of the striker portion 62 from the opening 64a of the latch member 64. This movement of the operation handle 60 induces expansion of the first and second links 46 and 50 thereby moving the hinged window 12 toward its fully open position. When the window 12 comes to the fully open position as indicated by phantom lines, the tapered projections 50a of the second link 50 are brought into engagement with the corresponding recesses 86a of the catching arms 86. With this, the window 12 is held in its fully open position.

When, then, it is required to close and lock the window 12, the operation handle 60 is strongly pulled inwardly, that is toward the inside of the vehicle for disengaging the tapered projections 50a of the second link 50 from the recesses 86a of the catching arms 86. The movement of the operation handle 60 toward the vehicle inside induces movement of the hinged window 12 toward its closed position, folding the first and second links 46 to 50. During this movement, the head of the striker portion 62 comes to contact with the tapered lower surface 78a of the claw portion 78 of the latch member 64 and slides on the same, moving the latch member 64 rightward in Fig. 2 against the biasing force of the spring 70. When the striker portion 62 comes to a position where the opening 62a thereof is aligned with the claw portion 78 of the latch member 64, the claw portion 78 is thrust into the opening 62a of the striker portion 62 by the action of the spring 70 thereby locking the striker portion 62. With this operation, the window 12 is locked in its closed position.

Now, it should be noted that the closing and locking operation of the window 12 can be made by a person who stands outside of the vehicle. In fact, when the window 12 is pushed toward the inside of the vehicle by a hand or hands of a person who stands outside of the vehicle, the striker portion 62 which moves together with the window 12 describes the same path as in the above-mentioned case.

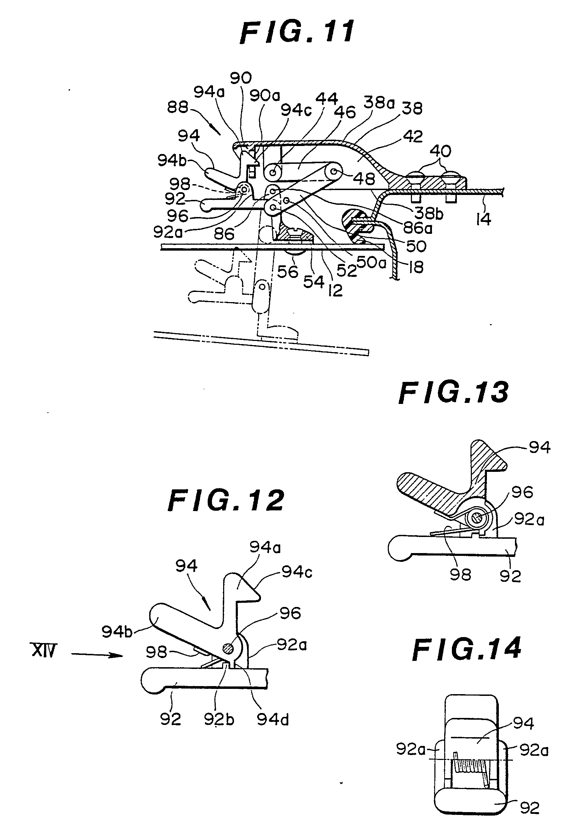

Referring to Figs. 11 to 14, especially Fig. 11, there is shown a second embodiment of the present invention. In these drawings, substantially the same parts as those in the first embodiment are designated by the same numerals.

The locking mechanism 88 of this second embodiment comprises a base member 38 secured to the vehicle body inner panel 14. First and second links 46 and 50 and a bracket 54 are constructed and arranged in substantially the same manner as in the case of the first embodiment. A partition wall 90 is spanned between the side walls 38b and 38c at a position near the leading end of the base member 38. For the reason which will become apparent hereinafter, the partition wall 90 is formed with an opening 90a.

An operation handle 92 is secured at one end to the bracket 54 which is secured to the hinged window 12. The handle 92 is formed at its generally middle section with a pair of spaced supporting lugs 92a. A generally V-shaped lever 94 having angled two wings 94a and 94b is pivotally mounted at its base portion on the supporting lugs 92 through a pivot shaft 96. The wing 94a is formed at its head with a hook 94c which is engageable with the above-mentioned opening 90a of the partition wall 90. As is seen from Fig. 12, the lever 94 is provided at the base portion thereof with a projection 94d which is engageable with another projection 92b of the operation handle 92 to restrict the rotation of the lever 94 in the clockwise direction in Fig. 12. A coil spring 18 is disposed about the pivot shaft 96 with its both ends respectively engaged with the wing 94b and the operation handle 92, so that the generally V-shaped lever 94 is biased to rotate in the clockwise direction, that is, in the direction to bring the projection 94d of the lever 94 into engagement with the projection 92b of the operation handle 92. The outer surface of the hook 94c is tapered as shown.

With this construction of the second embodiment, the operation of the same is as follows. For easy understanding of the operation, the explanation of it will commence with respect to a condition wherein the hinged window 12 is locked in its closed position, as is indicated by solid lines in Fig. 12. In this condition, the hook 94c of the lever 94 is received in and thus engaged with the opening 90a of the partition wall 90 of the base member 38, thereby locking the window 12 against the movement toward the open position.

When it is required to unlock and open the hinged window 12, the wing 94b of the lever 94 is pressed toward the handle 92 against the biasing force of the spring 98, causing the hook 94c of the lever 94 to be disengaged from the opening 90a of the partition wall 90. With the lever 94 being kept in this condition, the operation handle 92 is moved outwardly separating the hook 94c from the partition wall 90. This movement of the operation handle 92 induces expansion of the first and second links 46 and 50 thus moving the hinged window 12 toward its fully open position. When the window 12 comes to the fully open position as indicated by phantom lines, the projections 50a of the second link 50 are brought into engagement with the corresponding recesses 86a of the catching arms 86. With this, the window 12 is held in the fully open position.

When it is required to close and lock the window 12, the operation handle 92 is strongly pulled toward the inside of the vehicle for disengaging the projections 50a of the second link 50 from the corresponding catching recesses 86a. The movement of the operation handle 92 toward the vehicle inside induces movement of the hinged window 12 toward the close position, folding up the first and second links 46 and 50. During these movements, the tapered outer surface of the hook 94c of the lever 94 comes to contact with a free end of the partition wall 90 and slides on the same, rotating in the counterclockwise direction against the biasing force of the spring 98. When the hook 94c comes to a position to align with the opening 90a of the partition wall 90, the hook 90a is thrust into the opening 90a by the action of the spring 98 thus locking the lever 94 and thus the window 12 in its closed position.

It should be noted that, similar to the first embodiment, the closing and locking operation of the window 12 can be made from the outside of the vehicle. In fact, moving the window 12 toward its closed position causes the generally V-shaped lever 94 to describe the same path as in the above-mentioned case.

As is apparent from the above description, the following advantages are given from the present invention, which are:

(1) Since the dangerous parts, such as the inwardly projectable first and second links 46 and 50 are covered by the stationary base member 38, there is no possibility of hitting a passenger's body against such dangerous parts.

(2) Since the locking mechanism of the present invention is so constructed as to achieve the locking of the hinged window 12 not only from the inside but also from the outside of the vehicle, it offers convenience in handling the hinged window.

## Claims

1. A vehicle body having a locking mechanism for a window (12) which is hinged at its one edge to a vehicle body (14) so as to be swingable at the outside of the vehicle body to open and close a window opening (16) formed in the vehicle body, a base member (38) secured to the vehicle body and projected into the window opening, a toggle device including two pivotally connected links (46, 50), one link being pivotally connected at its free end to said base member and the other link being pivotally connected at its free end to a free end portion of the hinged window, characterised by a locking device (62, 62a, 64, 64a, 78, 78a, 70) (94, 94c, 90, 90a, 98) for locking said hinged window when said window takes its fully closed position, and in that said toggle device and said locking device are all located at the outside of said base member so as not to project toward the inside of the vehicle beyond the base member.

2. A vehicle body as claimed in Claim 1, in which said base member is of a generally channel-shaped construction comprising a smoothly curved bottom wall (38a) and two side walls (38b, 38c) by which is defined a groove (42) which faces toward the outside of the vehicle, and in which said toggle device and said locking devices are housed in said groove.

3. A vehicle body as claimed in Claim 2, in which said the other link of the toggle device is pivotally connected to the free end portion of the hinged window through a bracket (54).

4. A vehicle body as claimed in Claim 3, in which said locking device comprises: first means (62, 62a). (94) connected to said bracket to be movable therewith and thus with said hinged window; and second means (64, 64a, 78, 78a, 70) (94c, 90, 90a, 98) for locking, when said first means is moved to a predetermined position, said first means against the movement of the same in a direction to open the hinged window.

5. A vehicle body as claimed in Claim 4, in which said first · means comprises a striker member (62) which is projected toward the inside of said groove of the base member, said striker member being formed with an opening (62a), and in which said second means comprises a latch member (64) which is received in the groove (42) in a manner to be movable in a direction perpendicular to a direction in which said striker member moves, said latch member being formed with both an opening (64a) through which said striker member is insertable and a claw portion (78) which is projected into the opening of the latch member, said latch member being biased to move in one direction by biasing means (70) so that when said striker member is inserted into the opening of said latch member by a predetermined degree, said claw portion is forced to enter the opening of said striker member by the force of said biasing means.

6. A vehicle body as claimed in Claim 5, in which said claw portion is formed with a tapered surface (78a) to which the head of said striker member is contactable to move the latch member in the other direction against the force of the biasing means.

7. A vehicle body as claimed in Claim 6, in which said latch member is movably received in respective openings (66, 68) formed in spaced partition walls (38d, 38e) which are spanned between said side walls (38b, 38c) of said base member.

8. A vehicle body as claimed in Claim 7, in which said biasing means is a spring (70) which has one end connected to said latch member and the other end connected to said base member.

9. A vehicle body as claimed in Claim 8, in which said latch member is equipped with a stopper (76) which is contactable with one (38e) of said partition walls to restrict the excessive movement of said latch member which is induced by the force of said spring.

10. A vehicle body as claimed in Claim 9, in which said striker member is provided with an operation handle (60).

11. A vehicle body as claimed in Claim 4, in which said first means comprises a generally V-shaped lever (94) having two angled wings (94a, 94b), said lever being pivotally mounted at its base section on an extension (92a) from the bracket (54), and in which said second means comprises a hook portion (94c) formed on one (94a) of said wings, and an opening (90a) formed in a partition wall (90) spanned between said side walls of said base member, said V-shaped lever being biased to rotate in a direction by biasing means (98) so that when said lever approaches said bottom wall (38a) of said base member by a predetermined degree, said hook on said wing is forced to enter the opening (90a) of said partition wall by the action of said biasing means.

12. A vehicle body as claimed in Claim 11, in which said biasing means is a coil spring (98) which is disposed about a pivot shaft (96) by which said V-shaped lever is pivotally mounted to said extension, one end of said spring being connected to said lever and the other end of said spring being connected to said extension.

13. A vehicle body as claimed in Claim 11, in which said V-shaped lever is formed with a projection (94d) which is engageable with another projection (92b) formed on said extension thereby restricting the excessive rotation of the lever which is induced by the action of said spring.

14. A vehicle body as claimed in Claim 13, in which said extension is formed into an operation handle (92).

15. A vehicle body as claimed in Claim 4, further comprising open position holding means (50a, 86, 86a) for holding said hinged window in a fully open position.

16. A vehicle body as claimed in Claim 15, in which said open position holding means comprises at least one projection (50a) formed on the other link (50), and at least one catching arm (86) constructed of an elastic resilient material, said arm being formed with a recess (86a) into which said projection of said the other link is slidable when said two links (46, 50) are fully expanded.

## Revendications

1. Corps de véhicule pourvu d'un mécanisme de fermeture pour une fenêtre (12) qui est articulée par une extrémité à un corps de véhicule (14) de façon à être déplaçable vers l'extérieur du corps de véhicule pour ouvrir et fermer une ouverture de fenêtre (16) formée dans le corps de véhicule, comprenant
— un organe formant base (38) fixé au corps de véhicule et s'étendant dans ladite ouverture de fenêtre,
— un mécanisme articulé comprenant deux articulations (46, 50) reliées de façon pivotante, une articulation étant reliée de façon pivotante par son extrémité libre audit organe formant base (38) et l'autre articulation étant reliée de façon pivotante par son extrémité libre à la partie formant extrémité libre de la fenêtre articulée, caractérisé en ce qu'il comprend:
— un dispositif de fermeture (62, 62a, 64, 64a, 78, 78a, 70) (94, 94c, 90, 90a, 98) pour fermer ou verrouiller ladite fenêtre articulée lorsque la fenêtre prend sa position complète de fermeture, et en ce que ledit dispositif articulé et ledit dispositif de fermeture sont tous deux situés à l'extérieur de l'organe formant base de façon à ne pas s'étendre vers l'intérieur du véhicule au delà dudit organe formant base (38).

2. Corps de véhicule selon la revendication 1, caractérisé en ce que l'organe formant base est une construction ayant la forme générale d'un canal comprenant une paroi formant fond légèrement inclinée (38a) et deux parois latérales (38b, 38c) par lesquelles est définie une gorge (42) qui fait face à l'extérieur du véhicule, et en ce que le dispositif articulé précité et le dispositif de fermeture précité sont logés dans cette gorge.

3. Corps de véhicule selon la revendication 2, caractérisé en ce que l'autre articulation du dispositif articulé précité est reliée de façon pivotante à la partie formant extrémité libre de la fenêtre articulée par l'intermédiaire dun crochet (54).

4. Corps de vèhicule selon la revendication 3, caractérisé en ce que le dispositif de fermeture ou de verrouillage précité comprend:
— un premier moyen (62, 62a) (94) relié au crochet (54) précité pour être déplaçable avec celui-ci et ainsi avec la fenêtre articulée précitée; et
— un second moyen (64, 64a, 78, 78a, 70) (94c, 90, 90a, 98) pour fermer, lorsque ledit premier moyen est déplacé dans une position prédéterminée, ledit premier moyen contre le mouvement de celui-ci dans une direction d'ouverture de la fenêtre articulée.

5. Corps de véhicule selon la revendication 4, caractérisé en ce que le premier moyen précité comprend un organe formant frappeur (62) qui s'étend vers l'intérieur de la gorge précitée de l'organe formant base, ledit organe formant frappeur étant formé avec une ouverture (62a), et en ce que le second moyen précité comprend un organe formant loquet (64) qui est reçu dans la gorge (42) de façon à être déplaçable dans une direction perpendiculaire à la direction dans laquelle ledit organe formant frappeur se déplace, ledit organe formant loquet étant formé avec à la fois une ouverture (64a) à travers laquelle ledit organe formant frappeur peut être inséré et une partie formant griffe (78) qui s'étend dans ladite ouverture dudit organe formant loquet, ledit organe formant loquet étant forcé à se déplacer dans une direction par un moyen de contrainte (70) de façon que lorsque ledit organe formant frappeur (62) est inséré dans ladite ouverture dudit organe formant loquet à un degré prédéterminé, ladite partie formant griffe est forcée à entrer dans ladite ouverture dudit organe formant frappeur au moyen de la force dudit moyen de contrainte.

6. Corps de véhicule selon la revendication 5, caractérisé en ce que la portion formant griffe précitée est formée avec une surface effilée (78a) avec laquelle la tête de l'organe formant frappeur précité peut entrer en contact pour déplacer l'organe formant loquet dans l'autre direction contre la force dudit moyen de contrainte.

7. Corps de véhicule selon la revendication 6, caractérisé en ce que le moyen formant loquet précité est reçu de façon déplaçable dans les ouvertures respectives (66, 68) formées dans les parois de séparation espacées (38d, 38e) qui s'étendent entre les parois latérales (38b, 38c) précitées dudit organe formant base.

8. Corps de véhicule selon la revendication 7, caractérisé en ce que le moyen de contrainte précité est un ressort (70) ayant une extrémité reliée à l'organe formant loquet précité et l'autre extrémité étant reliée à l'organe formant base précité.

9. Corps de véhicule selon la revendication 8, caractérisé en ce que l'organe formant loquet précité est équipé d'un moyen d'arrêt (76) pouvant entrer en contact avec l'une (38e) des parois de séparation précitées pour restreindre le mouvement excessif dudit organe formant loquet, qui est induit par la force dudit ressort.

10. Corps de véhicule selon la revendication 9, caractérisé en ce que l'organe formant frappeur précité est pourvu d'une poignée d'actionnement (60).

11. Corps de véhicule selon la revendication 4, caractérisé en ce que le premier moyen précité comprend un levier (94) de forme générale en V ayant deux ailettes en angle (94a, 94b), ledit levier étant monté de façon pivotante par sa section formant base sur une extension (92a) du crochet (54) précité, et en ce que ledit second moyen comprend une partie formant crochet (94c) formée sur une (94a) desdites ailettes, et une ouverture (90a) formée dans la paroi de séparation (90) s'étendant entre lesdits parois latérales de l'organe formant base précité, ledit levier en forme de V étant contraint à pivoter dans une direction par un moyen de contrainte (98) de façon que lorsque ledit levier approche ladite paroi formant fond (38a) dudit organe formant base à un degré prédéterminé, ledit crochet sur ladite ailette est forcé à entrer dans l'ouverture (90a) de ladite paroi de séparation sous l'action dudit moyen de contrainte.

12. Corps de véhicule selon la revendication 11, caractérisé en ce que le moyen de contrainte précité est un ressort en spirale (98) qui est situé autour d'un axe (96) par lequel le levier en forme de V précité est monté de façon pivotante à l'extension précitée, une extrémité dudit ressort étant relié audit levier et l'autre extrémité dudit ressort étant relié à ladite extension.

13. Corps de véhicule selon la revendication 11, caractérisé en ce que le levier en forme de V précité est formé avec une partie en saillie (94d) pouvant venir en engagement avec une autre partie en saillie (92b) formée sur l'extension précitée pour restreindre la rotation excessive dudit levier qui est induite par l'action du ressort précité.

14. Corps de véhicule selon la revendication 13, caractérisé en ce que l'extension précitée est formée dans une poignée d'actionnement (92).

15. Corps de véhicule selon la revendication 4, caractérisé en ce qu'il comprend de plus des moyens de maintien en position d'ouverture (50a, 86, 86a) pour retenir ladite fenêtre articulée dans sa position complète d'ouverture.

16. Corps de véhicule selon la revendication 15, caractérisé en ce que le moyen de maintien en position ouverte précité comprend au moins une partie en saillie (50a) formée sur l'articulation (50) précitée et au moins un bras d'accrochage (86) construit dans un matériau élastique, ledit bras étant formé avec un évidement (86a) dans lequel ladite partie en saillie de ladite articulation est déplaçable par glissement lorsque les deux articulations (46, 50) précitées sont complètement étendues.

**Patentansprüche**

1. Fahrzeugkarosserie mit einem Verriegelmechanismus für ein Fenster (12), das an seiner einen Kante an der Fahrzeugkarosserie (14) für eine Schwenkbewegung zur Außenseite der Fahrzeugkarosserie zum Öffnen sowie Schließen einer in der Fahrzeugkarosserie ausgebildeten Fensteröffnung (16) angelenkt ist, mit einem an der Fahrzeugkarosserie befestigten, in die Fensteröffnung ragenden Basisbauteil (38) und mit einer Kniehebelvorrichtung, die zwei gelenkig verbundene Glieder (46, 50) umfaßt, von denen das eine an seinem freien Ende an das Basisbauteil und das andere an seinem freien ende an einen freien Endabschnitt des angelenkten Fensters gelenkig angeschlossen ist, gekennzeichnet durch

eine Verriegelvorrichtung (62, 62a, 64, 64a, 78, 78a, 70) (94, 94c, 90, 90a, 98), die das angelenkte Fenster, wenn dieses seine völlig geschlossene Lage einnimmt, verriegelt,

und dadurch, daß die Kniehebelvorrichtung sowie die Verriegelvorrichtung insgesamt an der Außenseite des Basisbauteils angeordnet sind, so daß sie nicht über das Basisbauteil hinaus zum Fahrzeuginneren vorragen.

2. Fahrzeugkarosserie nach Anspruch 1, dadurch gekennzeichnet, daß das Basisbauteil von allgemein rinnenartiger Bauweise ist und eine glatt gekrümmte Bodenwand (38a) sowie zwei Seitenwände (38b, 38c) aufweist, die eine der Fahrzeugaußenseite zugewandte Kehle (42) begrenzen, in der die Kniehebel- sowie Verriegelvorrichtung aufgenommen sind.

3. Fahrzeugkarosserie nach Anspruch 2, dadurch gekennzeichnet, daß das andere Glied der Kniehebelvorrichtung an den freien Endabschnitt des angelenkten Fensters über einen Haltebock (54) angeschlossen ist.

4. Fahrzeugkarosserie nach Anspruch 3, dadurch gekennzeichnet, daß die Verriegelvorrichtung umfaßt:

eine erste, mit dem Lagerbock verbundene sowie mit diesem und damit mit dem angelenkten Fenster bewegbare Einrichtung (62, 62a) (94) und eine zweite, die erste Einrichtung, wenn diese in eine vorbestimmte Lage bewegt ist, gegen eine Bewegung in einer das angelenkte Fenster öffnenden Richtung verriegelnde Einrichtung (64, 64a, 78, 78a, 70) (94c, 90, 90a, 98).

5. Fahrzeugkarosserie nach Anspruch 4, dadurch gekennzeichnet, daß die erste Einrichtung ein in das Innere der Kehle des Basisbauteils hineinragendes Stößelglied (62) umfaßt, das mit einer Öffnung (62a) ausgestattet ist, und daß die zweite Einrichtung ein Riegelglied (64) umfaßt, das in der Kehle (42) derart aufgenommen ist, daß es in einer zur Bewegungsrichtung des Stößelgliedes rechtwinkligen Richtung bewegbar ist, daß das Riegelglied sowohl mit einer Öffnung (64a), durch die das Stößelglied einführbar ist, wie auch mit einem in die Öffnung des Riegelgliedes ragenden Klauenteil (78) versehen ist und daß das Riegelglied durch ein Druckelement (70) einem Druck zu einer Bewegung in einer Richtung ausgesetzt ist, so daß bei in einem vorbestimmten Ausmaß in die Öffnung des Riegelgliedes eingeführtem Stößelglied das Klauenteil zum Eintritt in die Öffnung des Stößelteils durch die Kraft des Druckelements gezwungen wird.

6. Fahrzeugkarosserie nach Anspruch 5, dadurch gekennzeichnet, daß das Klauenteil mit einer sich verjüngenden Fläche (78a) ausgebildet ist, mit der der Kopf des Stößelglieds zur Berührung zu bringen ist, um das Riegelglied gegen die Kraft des Druckelements in die andere Richtung zu bewegen.

7. Fahrzeugkarosserie nach Anspruch 6, dadurch gekennzeichnet, daß das Riegelglied jeweils in Öffnungen (66, 68), die in zwischen den Seitenwänden (38b, 38c) des Basisbauteils sich erstreckenden, zueinander beabstandeten Trennwänden (38d, 38e) ausgebildet sind, beweglich aufgenommen ist.

8. Fahrzeugkarosserie nach Anspruch 7, dadurch gekennzeichnet, daß das Druckelement eine Feder (70) ist, deren eines Ende an das Riegelglied und deren anderes Ende an das Basisbauteil angeschlossen ist.

9. Fahrzeugkarosserie nach Anspruch 8, dadurch gekennzeichnet, daß das Riegelglied mit einem Anschlag (76) versehen ist, der mit einer (38e) der Trennwände in Berührung zu bringen ist, um eine übermäßige, durch die Kraft der Feder herbeigeführte Bewegung des Riegelgliedes zu beschränken.

10. Fahrzeugkarosserie nach Anspruch 9, dadurch gekennzeichnet, daß das Stößelglied mit einem Betätigungsgriff (60) versehen ist.

11. Fahrzeugkarosserie nach Anspruch 4, dadurch gekennzeichnet, daß die erste Einrichtung einen im allgemeinen V-förmigen Hebel (94) mit zwei winkelig angeordneten Armen (94a, 94b) umfaßt, der an seinem Fußteil an einem Ansatz (92a) des Haltebocks (54) gelenkig gelagert ist, daß die zweite Einrichtung ein am einen (94a) der Arme ausgebildetes Hakenteil (94c) sowie eine in einer zwischen den Seitenwänden des Basisbauteils sich erstreckenden Trennwand (90) ausgebildete Öffnung (90a) umfaßt und daß der V-förmige Hebel durch ein Druckelement (98) zu einer Drehung in einer solchen Richtung vorgespannt ist, daß bei Annäherung des Hebels an die Bodenwand (38a) des Basisbauteils um ein vorbestimmtes Ausmaß das Hakenteil an dem Arm zum Eintritt in die Öffnung (90a) der Trennwand unter dem Einfluß des Druckelements gebracht wird.

12. Fahrzeugkarosserie nach Anspruch 11, dadurch gekenzeichnet, daß das Druckelement eine Schraubenfeder (98) ist, die um eine Schwenkwelle (96), welche den V-förmigen Hebel drehbar an dem Ansatz lagert, herum angeordnet ist, wobei das eine Ende der Feder mit dem Hebel und das andere Ende der Feder mit dem Ansatz verbunden ist.

13. Fahrzeugkarosserie nach Anspruch 11, dadurch gekennzeichnet, daß der V-förmige Hebel mit einer Nase (94d) ausgestattet ist, die mit einer an dem Ansatz ausgebildeten weiteren Nase (92b) zur Anlage zu bringen ist, so daß eine übermäßige, durch den Einfluß der Feder hervorgerufene Drehung des Hebels beschränkt wird.

14. Fahrzeugkarosserie nach Anspruch 13, dadurch gekennzeichnet, daß der Ansatz zu einem Betätigungsgriff (92) ausgestaltet ist.

15. Fahrzeugkarosserie nach Anspruch 4, gekennzeichnet durch eine Offenstellung-Halteeinrichtung (50a, 86, 86a), die das angelenkte Fenster in einer völlig geöffneten Stellung hält.

16. Fahrzeugkarosserie nach Anspruch 15, dadurch gekennzeichnet, daß die Offenstellung-Halteeinrichtung wenigstens einen an dem anderen Glied (50) ausgebildeten Vorsprung (50a) und wenigstens einen aus einem elastischen Federmaterial gefertigten Arretierarm (86) umfaßt, der mit einer Vertiefung (86a), in die der Vorsprung am anderen Glied bei völliger Streckung der beiden Glieder (46, 50) hineingleitet, versehen ist.

# *FIG.1* PRIOR ART

# *FIG.2*

# FIG.3

38a
42
38c
38b
44
86a
86a
50
52
54

# FIG.4

38
40

# FIG.5

38

## FIG.6

## FIG.7

## FIG.8

## FIG.9

## FIG.10

# FIG. 11

# FIG.13

# FIG.12

# FIG.14

4